# EUROPEAN PATENT APPLICATION

(11) **EP 4 841 249 A1**
(43) Date of publication of application: **18.11.2026**
(21) Application number: 25893759.8
(22) Date of filing: 19.09.2025
(51) Int. Cl.: G01N 23/20, G01N 23/20066

(54) **PIPELINE INLINE INSPECTION SYSTEM AND METHOD BASED ON PARTICLE RADIATION DETECTION IMAGING**

(30) Priority: 25.11.2024 CN 202411691816
(71) Applicant: China Oil & Gas Pipeline Network Corporation, Beijing 100013 (CN); Pipechina Institute of Science and Technology, Tianjin 300450 (CN)
(72) Inventor: CHEN, Pengchao, Tianjin 300450 (CN); QIU, Honghui, Tianjin 300450 (CN); LI, Rui, Tianjin 300450 (CN); FU, Kuan, Tianjin 300450 (CN); WANG, Yanan, Tianjin 300450 (CN); DUAN, Jinyao, Tianjin 300450 (CN); HUANG, Jie, Tianjin 300450 (CN)
(74) Representative: Murgitroyd & Company
(86) International application number: PCT/CN2025/122630
(87) International publication number: WO 2026/108376

(57) **Abstract**

A pipeline inline inspection system and method based on particle radiation detection imaging. The system comprises a radiation source (3) and a plurality of detectors (2); the plurality of detectors (2) are circumferentially and evenly distributed at intervals around the radiation source (3); the plurality of detectors (2) are respectively used for receiving, during inspection, a plurality of scattered particle radiations (6) formed after a plurality of incident particle radiations (5) emitted by the radiation source (3) are scattered by a pipeline wall (1) to be inspected.

## Description

This application claims priority to Chinese Patent Application No. 202411691816.3, filed on November 25, 2024, which is incorporated herein by reference in its entirety.

### TECHNICAL FIELD

The present disclosure relates to the technical field of pipeline wall defect detection, and in particular, to a pipeline internal inspection system and method based on particle ray detection imaging.

### BACKGROUND

Oil and gas pipelines are essential infrastructure in an oil and gas transportation system. The construction and operation of pipelines are of great significance to the transportation of oil and gas resources in a country. Pipeline transportation is an important part of a transportation system of a country and plays a vital role in national economic and social development.

### SUMMARY

A pipeline internal inspection system based on particle ray detection imaging is provided in the embodiments of the present disclosure, and includes a ray source and a plurality of detectors. The plurality of detectors are circumferentially arranged at equal intervals around the ray source, and the plurality of detectors are configured to receive, during inspection, a plurality of scattered particle rays formed after a plurality of incident particle rays emitted by the ray source are scattered by a pipeline wall to be inspected.

In some embodiments, the pipeline internal inspection system further includes a mounting frame, and the ray source and the plurality of detectors are disposed on the mounting frame.

In some embodiments, each of the plurality of detectors is disposed on the mounting frame via an elastic member.

In some embodiments, each of the plurality of detectors has an arc-shaped structure.

In some embodiments, the pipeline internal inspection system further includes a shielding body. The shielding body is fixedly disposed on the mounting frame and covers the ray source.

In some embodiments, the shielding body is provided with a plurality of slots uniformly arranged at intervals, and the plurality of slots are used for the rays emitted by the ray source to pass through.

In some embodiments, lengths of the plurality of slots along a horizontal direction are all 20 mm.

In some embodiments, widths of the plurality of slots along an axial direction are all 4 mm.

In some embodiments, the shielding body has a closed cylindrical structure, and the plurality of slots are uniformly arranged at intervals along a circumferential direction of the shielding body.

In some embodiments, the pipeline internal inspection system further includes an electronic package, and the plurality of detectors are connected to the electronic package via signal cables.

In some embodiments, the pipeline internal inspection system further includes a data analysis computer, and the electronic package is communicatively connected to the data analysis computer.

In some embodiments, the ray source includes a gamma-ray source.

A pipeline internal inspection method based on particle ray detection imaging is further provided in the present disclosure. The method is performed by the pipeline internal inspection system based on particle ray detection imaging described above, and includes the following.

A ray source emits a plurality of incident particle rays, the plurality of incident particle rays are scattered to form a plurality of scattered particle rays after reaching a pipeline wall to be inspected, and a plurality of detectors receive the plurality of scattered particle rays.

### BRIEF DESCRIPTION OF THE DRAWINGS

FIG. 1 is a schematic radial cross-sectional view of a pipeline internal inspection system based on particle ray detection imaging, in accordance with some embodiments; and
FIG. 2 is a schematic axial cross-sectional view of a pipeline internal inspection system based on particle ray detection imaging, in accordance with some embodiments.

### Reference signs:

1, pipeline wall to be inspected; 2, detector; 3, ray source; 4, shielding body; 5, incident particle ray; 6, scattered particle ray; 7, electronic package; 8, signal cable.

### DETAILED DESCRIPTION

Embodiments of the present disclosure are described in detail below. Examples of the embodiments are illustrated in the accompanying drawings, where the same or similar reference signs denote the same or similar elements or elements having the same or similar functions throughout. The embodiments described below with reference to the accompanying drawings are exemplary and are merely intended to explain the present disclosure, and will not be construed as limitations on the present disclosure.

It will be noted that the embodiments and features of the embodiments in the present disclosure may be combined with each other without conflict.

In the description of the present disclosure, it will be understood that, orientations or positional relationships indicated by the terms such as "center", "longitudinal", "transverse", "upper", "lower", "front", "rear", "left", "right", "vertical", "horizontal", "top", "bottom", "inner", and "outer" are based on orientations or positional relationships shown in the drawings, which are merely for convenience of describing the present disclosure and simplifying the description, but are not to indicate or imply that the indicated devices or elements must have a particular orientation, or must be constructed or operated in a particular orientation, and therefore should not be construed as limiting the present disclosure. In addition, terms such as "first" and "second" are used merely for descriptive purposes, and are not to be construed as indicating or implying a relative importance or implicitly indicating the number of indicated technical features. Thus, a feature defined by the term "first" or "second" may explicitly or implicitly include one or more of the features. In the description of the present disclosure, the term such as "a/the plurality of" means two or more unless otherwise specified.

In the description of the present disclosure, it will be noted that, unless otherwise expressly specified and limited, the terms "mounted", "connected", and "coupled", should be interpreted broadly. For example, they may be fixed connections, detachable connections, or integral connections; or may be mechanical connections or electrical connections; or may be direct connections or indirect connections through an intermediate medium; or may be internal communication between two elements. Those of ordinary skill in the art may understand the specific meanings of the terms described above in the present disclosure according to specific situations.

Currently, the mainstream pipeline internal inspection methods in various countries include triaxial high-resolution magnetic flux leakage combined with geometry and ultrasonic technologies, which may detect and quantify volumetric defects and geometric deformation defects in a pipeline body. However, the current internal inspection technologies have a low detection rate for complex defects such as micro defects in pipeline girth welds and planar cracks due to factors such as detection mechanisms and operating conditions of internal inspection apparatuses.

Therefore, it is urgent to explore and develop new sensing and detection technologies to break through conventional detection methods such as acoustic, optical, magnetic and electrical methods, so as to achieve high-quality detection for defects in pipeline girth welds.

Conventional transmission-type ray detection imaging technology has been widely used in non-destructive testing, security inspection and other fields, is applicable to the detection of metal loss defects, and has favorable detectability for defects such as girth weld cracks, porosities and slag inclusions. However, in the conventional transmission-type ray imaging technology, a ray source and an imaging system are required to be disposed on two sides of the pipeline, respectively, and such technology requires a relatively long exposure time. Such inspection methods are not suitable for integration into an internal detector for pipeline internal inspection.

Ray detection technology based on scattering imaging is another detection method for ray detection. It performs imaging by using scattered rays that return, and has the advantages of fast detection speed and non-contact operation. The system structure may be mounted on a pipeline internal detector.

To address the technical problem of internal inspection for micro and complex defects on pipelines, a pipeline internal inspection method based on particle ray detection imaging is provided, which leverages the advantages of particle ray detection based on scattering imaging, thereby ultimately improving the detection accuracy and defect adaptability of the internal inspection system.

The present disclosure will be described in detail below with reference to the accompanying drawings in conjunction with the embodiments.

### Embodiment 1

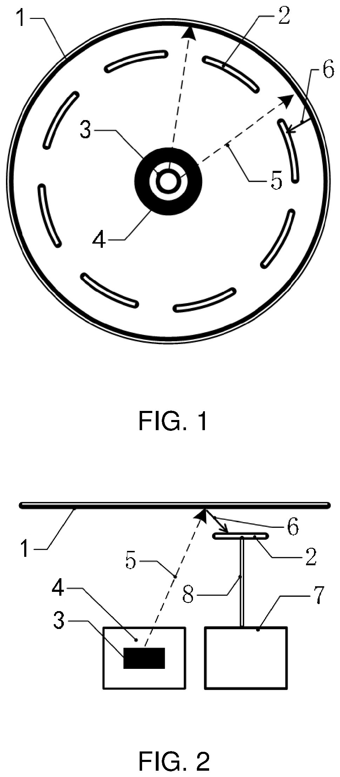

As shown in FIGS. 1 and 2, a pipeline internal inspection system based on particle ray detection imaging is provided in the embodiments of the present disclosure, and includes a ray source 3 and a plurality of detectors 2. The plurality of detectors 2 are circumferentially arranged at equal intervals around the ray source 3. The plurality of detectors 2 are configured to receive, during inspection, a plurality of scattered particle rays 6 formed after a plurality of incident particle rays 5 emitted by the ray source 3 are scattered by a pipeline wall 1 to be inspected.

During inspection, the entire apparatus is placed inside a pipeline to be inspected, and fluid transported within the pipeline serves as the power for the entire apparatus to move inside the pipeline. During the movement of the entire apparatus, the ray source 3 emits a plurality of incident particle rays 5. After reaching the pipeline wall to be inspected, the plurality of incident particle rays 5 are scattered to form a plurality of scattered particle rays 6, and the plurality of detectors 2 receive the plurality of scattered particle rays 6. Whether a defect exists on the pipeline wall is determined based on the scattered particle rays 6 received by the plurality of detectors 2.

It will be noted that the plurality of detectors 2 adopt the related art, and the detailed structures and principles thereof will not be repeated herein.

In the embodiments of the present disclosure, the design is reasonable, and it is possible to achieve rapid detection for defects on the pipeline wall, especially micro defects, thereby improving the accuracy and defect adaptability of pipeline internal inspection, and solving the technical problem of internal inspection for micro and complex defects on the pipelines.

### Embodiment 2

Based on Embodiment 1, the embodiments of the present disclosure further include a mounting frame. The ray source 3 and the plurality of detectors 2 are disposed on the mounting frame.

This solution has a simple structure and reasonable design. The plurality of detectors are integrated into a single unit by the mounting frame, for ease of use.

### Embodiment 3

Based on Embodiment 2, in the embodiments of the present disclosure, each of the plurality of detectors 2 is disposed on the mounting frame via an elastic member.

For example, in some embodiments, the elastic member may include a helical compression spring, a wave spring or the like, and the present disclosure is not limited thereto.

This solution has a simple structure and reasonable design. The plurality of detectors 2 use the elastic members to adapt to changes of the pipeline wall. In a case where there are protrusions on an inner wall of the pipeline, the corresponding detectors 2 may contract adaptively, so as to facilitate the inspection operation.

### Embodiment 4

Based on any one of Embodiments 2 and 3, in the embodiments of the present disclosure, each of the plurality of detectors 2 has an arc-shaped structure.

This solution has a simple structure and reasonable design. Curvatures of the plurality of detectors 2 match a curvature of the inner wall of the pipeline, thereby facilitating enhanced reception of the rays scattered by the pipeline wall, and greatly improving the detection accuracy.

### Embodiment 5

Based on any one of Embodiments 2 and 3, the embodiments of the present disclosure further include a shielding body 4. The shielding body 4 is fixedly disposed on the mounting frame and covers the ray source 3. The shielding body 4 is provided with a plurality of slots uniformly arranged at intervals, and the plurality of slots are used for the rays emitted by the ray source 3 to pass through.

This solution has a simple structure and reasonable design. The shielding body 4 may shield rays to prevent radiation, so as to ensure personal safety of operating personnel.

In some embodiments, lengths of the plurality of slots along a horizontal direction are all 20 mm.

By providing the slots with the length of 20 mm along the horizontal direction, it is possible to effectively form 360° collimated output.

In some other embodiments, widths of the plurality of slots along an axial direction are all 4 mm.

By providing the slots with the width of 4 mm along the horizontal direction, it is possible to effectively restrict the rays, so that the rays radiate only in the circumferential direction, thereby facilitating the installation of the shielding body in the circumferential direction. Regions outside the slots are all radiation-shielded safe regions, which improves ray safety.

In some embodiments, in the embodiments of the present disclosure, the shielding body 4 functions to direct gamma rays, reduce gamma-ray radiation doses, protect operating personnel, and reserve annular slots for ray emission. Relevant standards in various countries are required to be met, and no radioactive residue is generated.

An outer layer of the shielding body 4 is a titanium alloy protective housing with a built-in positioning system and a safety interlock mechanism.

In some embodiments, the safety interlock mechanism includes a status indicator (e.g., an indicator light).

By equipping the safety interlock mechanism, the safety of operating personnel may be guaranteed and the integrity of the apparatus may be preserved.

### Embodiment 6

Based on Embodiment 4, in the embodiments of the present disclosure, the shielding body 4 has a closed cylindrical structure, and the plurality of slots are uniformly arranged at intervals along a circumferential direction of the shielding body 4.

The shielding body 4 has a reasonable shape design, and matches the arrangement of the plurality of detectors 2, thereby ensuring the shielding effect.

### Embodiment 7

Based on the embodiments described above, the embodiments of the present disclosure further include an electronic package 7. The plurality of detectors 2 are connected to the electronic package 7 via signal cables 8.

This solution has a simple structure and reasonable design. The electronic package 7 supplies power to each electronic component, and receives and stores signals acquired by the plurality of detectors 2. The electronic package 7 transmits the processed signals to a data analysis computer, and the data analysis computer analyzes intensities of the scattered rays, to determine whether a defect exists on the pipeline wall. Theoretically, if no defects are on the inner wall of the pipeline, the intensities of all rays are the same; if a defect exists on the pipeline wall, the intensity of a ray will be relatively low, indicating that there is a defect at this location. Therefore, whether a defect exists on the inner wall may be effectively determined based on intensity of the ray.

The plurality of detectors 2 form a detector array, and the detector array is configured to receive gamma rays and convert them into electrical signals, and transmit data to the electronic package through the signal cables. The detector array is arranged over the entire circumference of the inner wall of the pipeline to form an annular shape, and a push-broom scanning path design is adopted. The plurality of detectors have the same lift-off value relative to the pipeline wall, and each detector has high resolution, thereby enabling extremely high detection accuracy.

The electronic package 7 receives data from the detector array and stores such data in a high-capacity memory inside the electronic package 7. Upon completion of the inspection operation, the data is downloaded and analyzed.

### Embodiment 8

Based on Embodiment 7, the embodiments of the present disclosure further include a data analysis computer, and the electronic package 7 is communicatively connected to a processor.

The data analysis computer (adopting the related art) analyzes the intensities of the scattered rays to determine whether a defect exists on the pipeline wall. Theoretically, if no defects are on the inner wall of the pipeline, the intensities of all rays are the same; if a defect exists on the pipeline wall, the intensity of a ray will be relatively low, indicating that there is a defect at this location.

Based on the solution described above, the electronic package 7 includes a power supply and a memory. Each detector 2 is connected to the power supply via the signal cable 8. The power supply is connected to the memory via the signal cable 8, and the memory is wirelessly and communicatively connected to the data analysis computer.

### Embodiment 9

Based on the embodiments described above, in the embodiments of the present disclosure, the ray source 3 includes a gamma-ray source.

The advantages of the gamma-ray source are mainly reflected in its high energy, strong penetrating power, non-destructive testing, precise positioning, high-efficiency operation, and low cost.

A radioactive element with a half-life of about 10 years is selected for the gamma-ray source, and a low-activity nuclide is chosen based on safety considerations.

As a detection excitation source, the gamma-ray source requires no power supply itself, and only the detector array and the electronic package are required to be powered, so that the number of batteries is reduced and the apparatus features low power consumption and light weight.

### Embodiment 10

Based on the embodiments described above, a pipeline internal inspection method based on particle ray detection imaging is further provided in the embodiments of the present disclosure. The method is implemented by the pipeline internal inspection system based on particle ray detection imaging described above, and includes the following steps.

The ray source 3 emits a plurality of incident particle rays 5. After reaching the pipeline wall to be inspected, the plurality of incident particle rays 5 are scattered to form a plurality of scattered particle rays 6. The plurality of detectors 2 receive the plurality of scattered particle rays 6.

The embodiments of the present disclosure further provides the pipeline internal inspection method based on particle ray detection imaging. This inspection method is reasonably designed and may achieve rapid detection for defects on the pipeline wall, especially micro defects, thereby improving the accuracy and defect adaptability of pipeline internal inspection, and solving the technical problem of internal inspection for micro and complex defects on the pipelines.

The inspection principle of the pipeline wall inspection method provided in the present disclosure is as follows.

The ray source 3 emits a plurality of incident particle rays 5. After reaching the pipeline wall to be inspected, the plurality of incident particle rays 5 are scattered to form a plurality of scattered particle rays 6. The plurality of detectors 2 receive the plurality of scattered particle rays 6. Meanwhile, the electronic package 7 supplies power to each electronic component and receives and stores the signals acquired by the plurality of detectors 2. The electronic package 7 transmits the processed signals to the data analysis computer, and the data analysis computer analyzes the intensities of the scattered rays, to determine whether a defect exists on the pipeline wall. Theoretically, if no defects are on the inner wall of the pipeline, the intensities of all rays are the same; if a defect exists on the pipeline wall, the intensity of a ray will be relatively low, indicating that there is a defect at this location. Therefore, whether a defect exists on the inner wall may be effectively determined based on intensity of the ray.

A novel pipeline internal inspection method is provided in the present disclosure, which addresses low detection rates of current mainstream internal inspection methods, such as magnetic flux leakage, ultrasonic and eddy current inspection in various countries, for complex defects such as micro defects in pipeline girth welds and planar cracks, thereby improving the technical level in the field of internal inspection.

The purpose of the present disclosure is to provide a pipeline internal inspection method based on particle ray detection imaging, so as to improve the accuracy and defect adaptability of internal inspection, and solve the technical problem of internal inspection for micro and complex defects on the pipelines.

It will be noted that all electronic components involved in the present disclosure adopt the related art, and the electrical connections between the various components and the control circuits between the various components are the related art.

It will be apparent to those skilled in the art that the present disclosure is not limited to the details of the exemplary embodiments described above, and the present disclosure may be implemented in other forms without departing from the spirit or essential characteristics of the present disclosure. Therefore, the embodiments will be regarded in all respects as exemplary and not restrictive. The scope of the present disclosure is defined by the appended claims rather than the foregoing description, and all variations falling within the meaning and scope of equivalents of the claims are intended to be embraced therein. Any reference signs in the claims will not be construed as limiting the scope of the claims.

Furthermore, it will be understood that although this specification is described in terms of embodiments, not every embodiment includes a single independent technical solution. Such manner of description in the specification is merely for clarity. Those skilled in the art will consider the specification as a whole, and the technical solutions in various embodiments may also be appropriately combined to form other embodiments understandable to those skilled in the art.

The foregoing descriptions are merely preferred embodiments of the present disclosure and are not intended to limit the present disclosure. Any modifications, equivalent substitutions, improvements and the like made within the spirit and principles of the present disclosure will fall within the protection scope of the present disclosure.

## Claims

1. A pipeline internal inspection system based on particle ray detection imaging, comprising: a ray source (3) and a plurality of detectors (2), wherein the plurality of detectors (2) are circumferentially arranged at equal intervals around the ray source (3), and the plurality of detectors (2) are configured to receive, during inspection, a plurality of scattered particle rays (6) formed after a plurality of incident particle rays (5) emitted by the ray source (3) are scattered by a pipeline wall (1) to be inspected.

2. The pipeline internal inspection system based on particle ray detection imaging according to claim 1, wherein the pipeline internal inspection system further comprises a mounting frame, and the ray source (3) and the plurality of detectors (2) are disposed on the mounting frame.

3. The pipeline internal inspection system based on particle ray detection imaging according to claim 2, wherein each of the plurality of detectors (2) is disposed on the mounting frame via an elastic member.

4. The pipeline internal inspection system based on particle ray detection imaging according to claim 2, wherein each of the plurality of detectors (2) has an arc-shaped structure.

5. The pipeline internal inspection system based on particle ray detection imaging according to claim 2, wherein the pipeline internal inspection system further comprises a shielding body (4), the shielding body (4) is fixedly disposed on the mounting frame, and the shielding body (4) covers the ray source (3).

6. The pipeline internal inspection system based on particle ray detection imaging according to claim 5, wherein the shielding body (4) is provided with a plurality of slots uniformly arranged at intervals, and the plurality of slots are used for the rays emitted by the ray source (3) to pass through.

7. The pipeline internal inspection system based on particle ray detection imaging according to claim 6, wherein lengths of the plurality of slots along a horizontal direction are all 20 mm.

8. The pipeline internal inspection system based on particle ray detection imaging according to claim 6, wherein widths of the plurality of slots along an axial direction are all 4 mm.

9. The pipeline internal inspection system based on particle ray detection imaging according to claim 6, wherein the shielding body (4) has a closed cylindrical structure, and the plurality of slots are uniformly arranged at intervals along a circumferential direction of the shielding body (4).

10. The pipeline internal inspection system based on particle ray detection imaging according to any one of claims 1 to 5, wherein the pipeline internal inspection system further comprises an electronic package (7), and the plurality of detectors (2) are connected to the electronic package (7) via signal cables (8).

11. The pipeline internal inspection system based on particle ray detection imaging according to claim 10, wherein the pipeline internal inspection system further comprises a data analysis computer, and the electronic package (7) is communicatively connected to the data analysis computer.

12. The pipeline internal inspection system based on particle ray detection imaging according to any one of claims 1 to 5, wherein the ray source (3) includes a gamma-ray source.

13. A pipeline internal inspection method based on particle ray detection imaging, wherein the pipeline internal inspection method is performed by the pipeline internal inspection system based on particle ray detection imaging according to any one of claims 1 to 12, and the pipeline internal inspection method comprises the following:
a ray source (3) emits a plurality of incident particle rays (5), the plurality of incident particle rays (5) are scattered to form a plurality of scattered particle rays (6) after reaching a pipeline wall (1) to be inspected, and a plurality of detectors (2) receive the plurality of scattered particle rays (6).
